Europäisches Patentamt

(19) European Patent Office

Office européen des brevets

(11) EP 0 591 567 B1

## (12) EUROPÄISCHE PATENTSCHRIFT

(45) Veröffentlichungstag und Bekanntmachung des Hinweises auf die Patenterteilung:
**07.05.1997 Patentblatt 1997/19**

(51) Int. Cl.$^6$: **B09B 1/00**, B09B 3/00

(21) Anmeldenummer: **92116999.1**

(22) Anmeldetag: **05.10.1992**

(54) **Verfahren zur Behandlung von kontaminiertem Erdreich**

Method for the treatment of contaminated soil

Procédé de traitement de sols contaminés

(84) Benannte Vertragsstaaten:
**AT CH DE LI**

(43) Veröffentlichungstag der Anmeldung:
**13.04.1994 Patentblatt 1994/15**

(73) Patentinhaber: **Kollmann, Hermann, Dr.**
**D-84028 Landshut (DE)**

(72) Erfinder: **Kollmann, Hermann, Dr.**
**D-84028 Landshut (DE)**

(74) Vertreter: **Riederer Freiherr von Paar zu Schönau, Anton et al**
**Lederer, Keller & Riederer,**
**Postfach 26 64**
**84010 Landshut (DE)**

(56) Entgegenhaltungen:
**WO-A-91/02565        DE-A- 2 930 418**
**DE-A- 3 525 701        DE-A- 3 703 442**
**DE-A- 4 006 359        DE-A- 4 040 838**
**GB-A- 2 141 732        US-A- 4 997 313**

- **'ULLMANNS ENCYKLOP[DIE DER TECHNISCHEN CHEMIE, BAND 6: Umweltschutz und Arbeitssicherheit' 1981 , ISBN 3-527-20006-1, VERLAG CHEMIE , WEINHEIM DE**

## Beschreibung

Die Erfindung bezieht sich gemäß dem Oberbegriff des Anspruchs 1 auf ein Verfahren zur Behandlung von kontaminiertem Erdreich, und zwar gemeinsam mit einer bereits geschlossenen Mülldeponie (Altdeponie), und betrifft somit die Altlastensanierung, die eines der großen Probleme der meisten Städte darstellt.

Das derzeitig ständig wachsende Abfallproblem konzentriert sich nicht nur auf anfallenden Haushalts- und Gewerbemüll, sondern auch in immer stärkerem Maße auf kontaminierte Böden und die in den Kläranlagen anfallenden Mengen von Klärschlamm. In "Behandlung" kontaminierter Böden", Berichte aus Wassergüte- und Abfallwirtschaft, Technische Universität München, 1991, Nr. 108, werden verschiedene Verfahren zur Behandlung und Sanierung kontaminierter Böden beschrieben. Grundsätzlich sind thermische Verfahren, Waschverfahren, Bodenluft-Absaugeverfahren und biologische Verfahren bekannt. Diesen Verfahren ist gemein, daß die Sanierung des kontaminierten Bodens nur unter hohem technologischem Aufwand evtl. unter Sperrung der entsprechenden Flächen durchführbar ist.

Es ist auch bekannt (WO-A-9 102 565), kontaminiertes Erdreich beispielsweise in einem Biobeet als Behandlungsfläche in einem geschlossenen Wasserkreislauf zu behandeln und hierbei Belebtschlamm aufzubringen, um das Entstehen von schadstoffabbauenden Mikroorganismen zu fördern. Die Anlage des Biobeets erweist sich jedoch, insbesondere unter Berücksichtigung der langen Behandlungsdauer, als riskant im Hinblick auf das Entweichen von Wasser, außerdem ist die Anlage für die ausschließliche Behandlung von kontaminiertem Erdreich insgesamt relativ aufwendig.

Andererseits kommt es, wenn derzeit der Betrieb einer Mülldeponie aus Kapazitätsgründen eingestellt wird, üblicherweise zum endgültigen Abschluß der Deponie und zum Anlegen einer neuen. Die geschlossene Deponie, nun als Altdeponie bezeichnet, muß dann in einen Zustand versetzt werden, bei dem die umweltschädlichen Wirkungen der in der Deponie enthaltenen Schadstoffe möglichst gering gehalten werden. Dabei besteht die Hauptgefahr in dem Eindringen von Schadstoffen in das Grundwasser, wobei diese Stoffe entweder durch Niederschlag oder durch eindringendes Sickerwasser aus dem Müllkörper ausgespült werden. Es wird daher versucht, die durch die Altdeponie fließende Wassermenge einerseits möglichst gering zu halten und andererseits das Austreten des Sickerwassers in den Grundwasserbereich zu verhindern.

Zumeist erfolgt dies durch die seitliche Einfassung der Mülldeponie und die Isolierung von oben durch eine wasserdichte Schicht (z.B. Ton). Auch an der Unterseite wird vorzugsweise abgedichtet, das Tiefersickern des Sickerwassers kann jedoch auch durch Abwehrbrunnen ausreichender Pumpleistung verhindert werden. Da es sich hierbei um eine "hydraulische Abdichtung" handelt, kann jedenfalls die Deponiebegrenzung als "Wanne" bezeichnet werden. Auf diese Weise wird eine sogenannte Mumifizierung des Müllkörpers erreicht, die nach Meinung der Fachwelt die Altdeponie unschädlich macht, jedoch tatsächlich hinsichtlich des Schadstoffabbaus unwirksam und bezüglich ihrer abdichtenden Funktion nur von begrenzter Dauer ist. Der Müllkörper zeigt aufgrund seiner Zusammensetzung plastisches Verhalten, wodurch es zu Versetzungen und Spannungen an der Oberfläche kommt, was wiederum die Undurchlässigkeit der oberen Isolationsschicht stört. Durch Risse und Spalte der oberen Isolationsschicht und durch den hydraulischen Druck des umgebenden Grundwassers kommt es zum Ein- und Austritt von Wasser in den bzw. aus dem Müllkörper, welches die Schadstoffe ausspült und eine Gefahr für die grundwasserführenden Schichten darstellt. Es ist also eingedrungenes Wasser aus dem Müllkörper bzw. aus den darunterliegenden Schichten abzupumpen, um somit einen hydraulischen Unterdruck gegenüber der Umgebung zu erzeugen und das Eindringen der Schadstoffe in das Grundwasser zu verhindern. Durch die weitgehende Mumifizierung des Müllkörpers sind dann die Abbauprozesse, insbesondere aerobe, in ihrem Ablauf fast vollständig blockiert. Der gesamte Müllkörper erfährt also nur langsame Veränderungen, und die Kontrolle und Bearbeitung der stillgelegten Mülldeponie kann in einer historischen Zeitspanne nicht eingestellt werden.

Es ist bekannt (DE-A-3525701), Deponien, deren Sickerwässer einen Gehalt an organischen und halogenierten Verbindungen aufweisen, dadurch zu sanieren, daß die Deponie von oben mit Wasser berieselt wird und unten aus der Deponie austretende Sickerwässer zumindest teilweise von schädlichen Bestandteilen gereinigt werden und dann im Kreislauf wieder auf die Deponie aufgebracht werden. Eine Sickerwasserkreislaufführung wird auch bereits an einigen aktiven Betriebsdeponien eingesetzt (Cord-Landwehr, 1986). Hierbei steht aber der Gesichtspunkt der Sickerwasservermeidung, bzw. der -verminderung im Vordergrund. Die sich in Altdeponien abspielenden Vorgänge spielen bei Betriebsdeponien keine nennenswerte Rolle.

Bei einer korrekten chemischen und mikrobiologischen Überwachung und einer sich daraus ergebenden Steuerung der Vorgänge ist eine gezielte Unterstützung des Abbaus der Schadstoffe möglich. Biologisch nicht abbaubare Schadstoffe werden durch die Kreislaufführung langfristig in unlösliche Verbindungen wie z.B. Oxide, Hydroxide und Sulfide umgewandelt. Über einen absehbaren Zeitraum kommt es dann zu einer Vererzung der biologisch nicht abbaubaren Schadstoffe, d.h. diese Schadstoffe werden in einen unproblematischen inerten Zustand überführt. Abhängig von den spezifischen Schadstoffbelastungen der Mülldeponie ist mit einer vollständigen Sanierung in einem Zeitraum von dreißig bis einhundert Jahren zu rechnen. Unter vollständiger Sanierung versteht man in diesem Falle die Überführung des gesamten Deponiekörpers in einen problemfreien inerten Zustand. Nach Erreichen dieses Zustandes kann die Überwachung der Deponie eingestellt werden und das Gelände wieder einer anderweitigen Verwendung zugeführt werden.

Durch die Erfindung soll kontaminiertes Erdreich in einen gefährdungsfreien Zustand überführt werden.

Dies wird gemäß Anspruch 1 in Verbindung mit einer Altdeponie erreicht, bei der die Oberseite nicht versiegelt ist, wobei das kontaminierte Erdreich auf dieser Oberseite aufgebracht wird und dann zusammen mit dem Müllkörper behandelt und saniert wird. Der Abbau der Schadstoffe wird dabei in überblickbaren Zeiträumen bewirkt und das kontaminierte Erdreich selbst in großen Mengen praktisch nebenbei mitsaniert. Dies stellt eine effektive Möglichkeit der Sanierung kontaminierter Böden unter Einbezug von Klärschlamm dar, die also unter Ausnützung der vorhandenen Alt-Mülldeponie durchführbar ist.

Grundsätzlich geht man bei dem Verfahren nach der Erfindung von einer bereits seit einigen Jahren abgeschlossenen Mülldeponie aus, die sowohl nach unten als auch seitlich eine abdichtende Begrenzung erhält. Diese Abdichtung erfolgt nach bekannten Verfahren. So werden z.B. unter weiträumiger Ausdehnung Schmalwände zur Umfassung des Deponiekörpers eingebracht. Die Isolierung des Deponiekörpers gegenüber den darunterliegenden Schichten kann durch ein Einziehen von z.B. Stahlplatten erreicht werden. Oftmals befinden sich die Deponien allerdings auch auf geologischen Schichten, die eine ausreichende Abdichtung gewährleisten. Eine solche geologische Schicht muß sich in bautechnisch erreichbarer Tiefe befinden, um die seitlichen Begrenzungswände auf ihr zu gründen und damit eine den gesamten Deponiekörper umschließende Wanne herstellen zu können. Die Abdichtung nach unten kann in bekannter Weise auch als hydraulische Abdichtung durch Abwehrbrunnen geschaffen sein. Die Ausdehnung der seitlichen Umfassung kann sich nach dem Bedarf an Lagerplatz für die kontaminierten Böden richten.

Aus der durch die geeignete Verbindung von baulichen Maßnahmen und natürlichen Gegebenheiten ausreichend dichten Wanne, in der sich der Müllkörper mit dem darauf abgelagerten kontaminierten Erdreich befindet, kann wie bekannt mit dem Abpumpen des sich im unteren Bereich des Müllkörpers sammelnden Sickerwassers begonnen werden. Das Einbringen der erforderlichen Förderbrunnen geschieht nach bekannten Verfahren.

Das abgepumpte Wasser wird nach einer im weiteren noch beschriebenen Behandlung über dem Altdeponiegelände erneut verrieselt. Dadurch kommt es zu einer erhöhten Verdunstung, die so hoch sein kann, daß keine zusätzliche Abfuhr des Niederschlagswassers und des aus der Umgebung in den Deponiekörper eingedrungenen Sickerwassers erforderlich wird. Wasserüberschuß aufgrund der natürlichen Niederschläge kann durch die künstliche Berieselung vollständig oder zu einem großen Teil verdunstet werden. Es ist aber auch möglich, einen überschüssigen Teil des Sickerwassers abzuführen und nach einer Reinigung einer Kläranlage zuzuführen. Dabei muß lediglich sichergestellt bleiben, daß die die Deponie vertikal durchfließende Wassermenge so groß bleibt, daß die Abbau- und Ausspülprozesse aufrechterhalten bleiben. Das im Kreislauf zirkulierende Sickerwasser wird nach jedem Abpumpen einer entsprechenden Behandlungsstation zugeführt, wie sie aus dem Stand der Technik bekannt ist.

Durch die Berieselung der Deponie und den damit verbundenen Kreislauf des Sickerwassers kann in bekannter Weise der Sauerstoffgehalt in dem gesamten Deponiebereich erhöht werden. Damit wird eine biologische Sanierung des Deponiekörpers möglich. Die für eine biologische Sanierung entscheidenden Mikrolebewesen werden ausreichend mit Sauerstoff versorgt, auch kann über das zirkulierende Sickerwasser eine gezielte Impfung der Deponie mit Bakterien erfolgen, welche diese biologischen Abbauprozesse beschleunigen. Um solche Mikroben ausreichend mit Nahrung zu versorgen, ist es weiterhin möglich, an bestimmten Stellen gezielt Klärschlamm aufzubringen.

Die in dem Klärschlamm enthaltenen Nährstoffe werden mit dem zirkulierenden Wasser mitgeführt und dadurch an jeden Punkt, sowohl in vertikaler als auch in horizontaler Ausrichtung der Deponie befördert. Die übrige Oberfläche der Deponie wird günstigerweise mit einem intensiven Pflanzenbewuchs versehen. Damit läßt sich eine zusätzliche Erhöhung der Verdunstung und eine weitere Begünstigung des biologischen Sanierungsprozesses erreichen.

Die Maßnahme nach Anspruch 4 kann in einem Klima, bei dem eine die Niederschlagsmenge kompensierende Verdunstung nicht ohne weiteres erreichen kann, dazu verhelfen, daß ein Teil der Niederschläge aufgefangen und abgeleitet wird.

Nach Anspruch 6 können in den Deponiekörper geeignete Mittel eingebracht werden, die ein Absaugen der sich im Müll bildenden Gase gestatten. Die Einrichtungen zum Absaugen der Deponiegase saugen vorzugsweise die Bodenluft aus größeren Tiefen des Müllkörpers ab. Einerseits erreicht man damit eine Erhöhung der Sauerstoffzufuhr, andererseits werden flüchtige Schadstoffe wie z.B. LHKW (leichtflüchtige halogenierte Kohlenwasserstoffe) ausgetragen, welche nach bekannten Verfahren ausgefiltert werden können.

Weitere Einzelheiten, Vorteile und Weiterbildungen der Erfindung ergeben sich aus der folgenden Beschreibung bevorzugter Durchführungsbeispiele und entsprechender Anlagen unter Bezugnahme auf die Zeichnung. Es zeigen:

Fig. 1    eine schematische Darstellung einer mit kontaminiertem Erdreich bedeckten Altdeponie mit daran installierter Sickerwasser-Kreislaufführung;

Fig. 2    eine schematische Darstellung einer in Ergänzung zur Sickerwasser-Kreislaufführung nach Fig. 1 verwendbaren Anlage zur Entgasung;

Fig. 3    eine schematische Darstellung einer Anlage zur Durchführung des Verfahrens mit Sickerwasser-Kreislaufführung und Entgasung.

Eine Alt-Mülldeponie 1 besteht aus einem zumeist hügelartig angehäuften Müllkörper 2, der beim beschriebenen Beispiel auf einer Kiesschicht 3 aufruht. Gegen den umgebenden Boden sind der Müllkörper 2 und die Kiesschicht 3 auf der Unterseite durch eine dichte Bodenschicht 4 und seitlich durch dichte Begrenzungen in Form von Seitenwänden 5, nämlich Schmalwänden, abgeschottet. Soweit keine dichte Bodenschicht zur Verfügung steht, muß bei 4 ein dichter Boden geschaffen werden, beispielsweise durch Beton und eingelegte Stahlplatten. Die Abdichtung nach unten kann aber auch in bereits beschriebener Art auf hydraulischem Wege erfolgen.

Auf der Oberseite des Müllkörpers 2 ist eine Schicht kontaminierten Erdreichs 8 aufgehäuft worden.

Es ist das Bestreben, daß aus dem kontaminierten Erdreich 8, dem Müllkörper 2 und der Kiesschicht 3 keinerlei Schadstoffe und somit kein Sickerwasser nach außen gelangen. Beim dargestellten Beispiel hat das umgebende Grundwasser, nämlich das oberste Grundwasserstockwerk, einen Grundwasserspiegel 6, der oberstromig höher liegt als unterstromig. Um Leckagewasser allenfalls vom Grundwasser in die durch die Schicht 4 und die Seitenwand 5 gebildete Wanne 11 hineinfließen zu lassen, jedoch ein Hinausdringen von kontaminiertem Sickerwasser zu vermeiden, ist der Sik-kerwasserspiegel 7 in der Wanne 11 so eingestellt, daß er niedriger liegt als der außen an der Seitenwand anliegende Grundwasserspiegel 6. Das Druckgefälle sucht deshalb eine Strömung nur in die Wanne 11 hinein, nicht aber aus dieser heraus zu erzeugen.

Die Einstellung des Sickerwasserspiegels 7 erfolgt mit Hilfe eines Sickerwasserbrunnens 12, der bis in die Kiesschicht 3 hinunterreicht und der mit Hilfe einer Pumpe 13 Sickerwasser aus der Wanne 11 herauspumpt. Das abgepumpte Sickerwasser wird nach einer Behandlung auf die unversiegelte, mit dem kontaminierten Erdreich 8 belegte Oberseite des Müllkörpers 3 verregnet; in der Schicht des kontaminierten Erdreichs 8 und im Müllkörper 2 verdunstet es teilweise, und teilweise sickert es durch diese Materialien wiederum hindurch und mischt sich dem in der Kiesschicht stehenden Sickerwasser mit dem Spiegel 7 zu. Dort strömt das Sickerwasser entsprechend Pfeilen 8 langsam wieder zum Sickerwasserbrunnen 12.

Soweit keine Kiesschicht vorhanden ist, steht das Sickerwasser - in Horizontalrichtung einigermaßen beweglich - im Fußbereich des Müllkörpers 2.

Bei diesem Kreislauf durchläuft das Sickerwasser außerhalb des Müllkörpers 2 verschiedene Bearbeitungsstufen: Auf die Pumpe folgt zunächst eine Abwasserreinigungsstation 14, die aus einzelnen Stufen zur mechanischen, biologischen und chemischen Reinigung bestehen kann. Danach schließt sich eine Entgasungsstation 15 an, in der das Sickerwasser durch Vakuum, das durch einen Verdichter 16 erzeugt wird, entgast wird. Hierdurch werden aus dem Sickerwasser Schadstoffe wie CKW (chlorierte Kohlenwasserstoffe), LHKW (leichtflüchtige halogenierte Kohlenwasserstoffe), FCKW (fluorierte chlorierte Kohlenwasserstoffe) und ähnliche entfernt, die anschließend in einem Aktivkohlefilter 17 aus dem abgezogenen Gas ausgefiltert werden.

Eine weitere Abwasserstation 18 kann hier folgend in den Kreislauf eingebaut sein. Diese ist zu der ersten Abwasserreinigungsstation 14 korrespondierend und wirkt mit dieser im Verbund zusammen. Je nach Wasserverschmutzungsgrad kann eine der beiden Stationen 14, 18 auch entfallen.

Das entgaste Sickerwasser wird nun zu einer Belüftungsstation 21 geleitet, in der es wiederum mit Gas, und zwar mit Sauerstoff angereichert wird. Hierzu wird Luft durch einen Verdichter 22 hindurchgeblasen. Nach dem Ausgang der Belüftungsstation 21 wird ein Teil des strömenden Sickerwassers abgezweigt und einem Bioreaktor 23 zugeleitet, in dem dem Sickerwasser speziell gezüchtete Bakterien, Pilze und Hefe zugesetzt werden, also aerobe Mikroorganismen, die Schadstoffe wie Mineralöle, Benzol, Thenol, Formaldehyd und anderes zersetzen und so auf biotechnologischem Weg entsorgen. Das so geimpfte Wasser wird dem Sickerwasserstrom wieder beigemischt. Der Sickerwasserstrom erreicht nun eine Verrieselungsanlage 24, die das so rezirkulierte Sickerwasser über verteilte Düsen 25 auf den Müllkörper regnet. An der Oberseite des Müllkörpers 2 ist noch ein Rückhalte-Speicherbecken 31 angelegt, das etwa als Wochenspeicher dient und über eine Zufuhrleitung 32 aus dem Kreislauf des Sickerwassers gespeist wird.

Im Betrieb fällt auf das kontaminierte Erdreich 8 sowohl das verrieselte Sickerwasser 33 als auch Regenwasser 34. Es dringt in den Müllkörper 2 vor und aus diesem verdunstet Wasser in Form von Wasserdampf 35. Falls es sich um ein humides Klima handelt, übersteigt im Prinzip die Menge des Regenwassers 34 diejenige des aufsteigenden Wasserdampfs 35, so daß grundsätzlich die Tendenz besteht, daß der Sickerwasserspiegel 7 immer höher ansteigt und schließlich Wasser ins Grundwasser übertritt. Aufgrund des Sickerwasserkreislaufs wird jedoch in den oberen Schichten des Müllkörpers insbesondere an heißen Tagen so viel Wasser verdampft, daß zwischen der Menge des Regenwassers 34 und der Menge des aufsteigenden Wasserdampfs 35 durch Steuerung der Pumpe 13 ein Gleichgewicht hergestellt werden kann. Sollte die Verdunstung nicht ausreichen, so müßte ein Teil der Niederschläge durch Dachkonstruktionen oder dergleichen abgeleitet werden (nicht dargestellt) oder mit bekannten Verfahren nach dem Durchsickern durch die Deponie abgepumpt, gereinigt und abgeleitet werden.

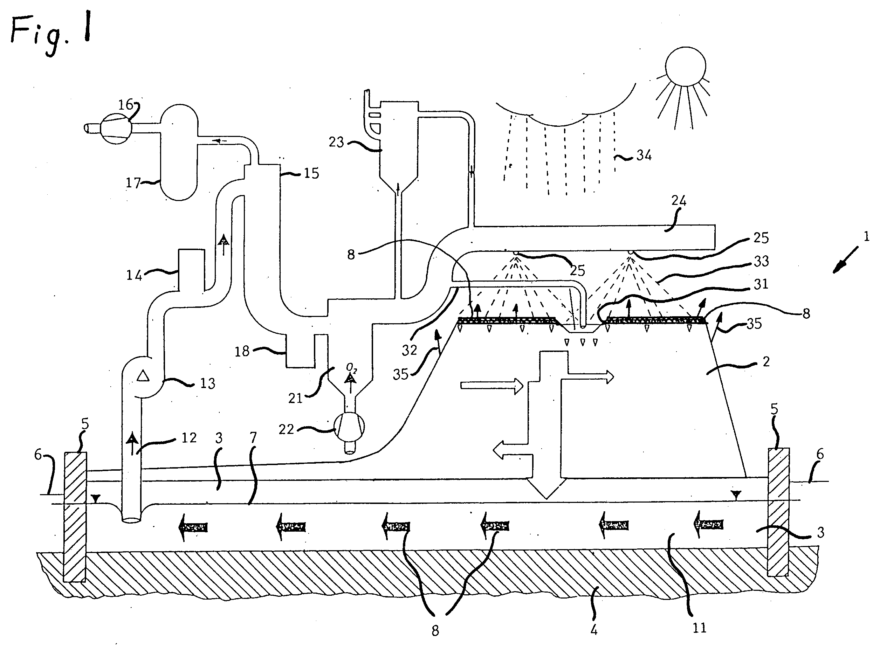

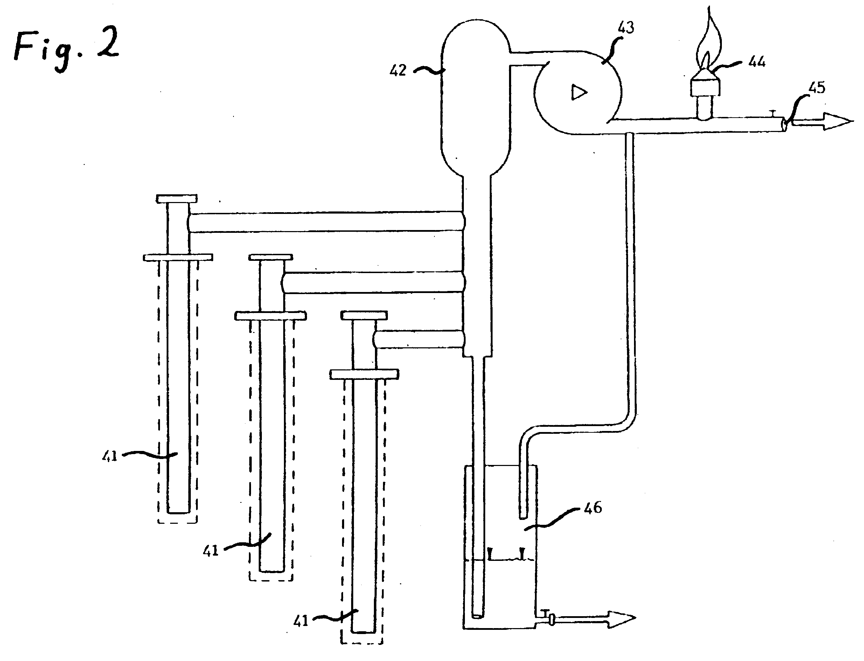

Fig. 2 zeigt als Ergänzung zur Anordnung nach Fig. 1 noch eine Anordnung zur Entgasung des Müllkörpers 2 mit Hilfe von Gasbrunnen 41, also in den Müllkörper 2 eingesenkten perforierten Rohren 41, die über einen Gassammler 42 und einen Verdichter 43, beim dargestellten Beispiel einen Radialverdichter, Gas, beispielsweise Methan, aus dem Müllkörper abführen und bei 44 abfackeln oder an einem Anschluß 45 für andere Verwendung bereitstellen. Gleiche Gasbrunnenkonstruktionen können auch dazu verwendet werden, bei Bedarf Luft - und damit Sauerstoff - in das Volumen des Müllkörpers 2 hineinzudrücken.

Das aus dem Müllkörper gezogene Gas enthält auch eine gewisse Menge dampfförmiger Stoffe, überwiegend Wasserdampf, die als Kondensat in einem Kondensatabscheider 46 gesammelt werden. Beim Kondensat handelt es sich zu einem größeren Anteil um Wasser und darin lösliche oder aufgeschwemmte Bestandteile, die vom Kondensatabscheider 46 wieder in den Sickerwasserkreislauf zurückgespeist werden.

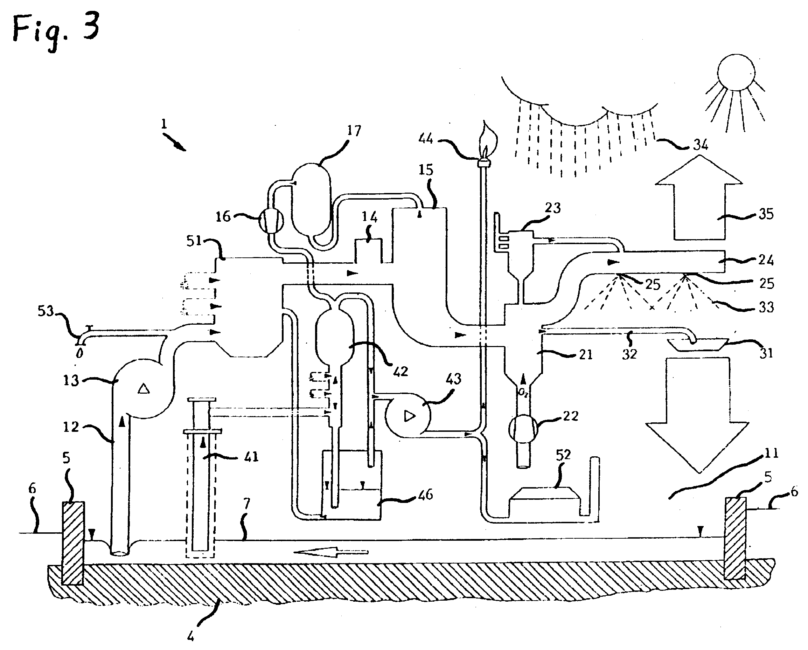

Fig. 3 veranschaulicht nun nochmals schematisch und ohne konkrete Darstellung des Müllkörpers 2 und der Erdschicht 8 in der Altdeponie 1 eine Gesamtanlage, die mehrere Sickerwasserbrunnen 12 und mehrere Gasbrunnen 41 umfaßt. Die mehreren Sickerwasserbrunnen speisen in einen Sickerwassersammler 51, dem auch das Kondensat vom Kondensatabscheider 46 eingspeist wird und der seinerseits das Sickerwasser an die Entgasungsstation 15 weiterleitet. Das aus der Entgasungsstation 15 über das Filter 17 und den Verdichter 16 abgeleitete Gas wird dem Gassammler 42 eingegeben, dem auch das Gas von den Gasbrunnen 41 eingespeist wird. Am Anschluß 45 (Fig. 2) ist bei der Installation nach Fig. 3 eine Anlage 52 zur Deponiegasverwertung dargestellt. Schließlich weist die Installation noch eine Probenentnahmestelle 53 auf.

Die dargestellten Installationen dienen der Durchführung des Verfahrens, wobei die folgenden Einzelvorgänge und Gesichtspunkte beachtlich sind:

Das kontaminierte Erdreich 8 besteht im wesentlichen aus kontaminiertem Bodenaushub, der gegebenenfalls in situ vorgereinigt wurde (z. B. durch Bodenluftabsaugung). Je nach Schadstoffbelastung kann er im Rahmen der Erfindung entweder direkt auf den Müllkörper 2 aufgebracht oder zuerst noch einer Vorbehandlung unterzogen worden sein.

In der bereits geschlossenen, also Alt-Mülldeponie finden sich beispielsweise Reste folgender Abfälle:

PCB-haltige Abfälle, Lackabfälle, Farbreste usw., Altöl, Methylenchlorid, halogenhaltige Lösemittel, Waschbenzin, Bohröl, Galvanikschlamm mit Beimengungen, phosphathaltiger Schlamm, Rückstände aus Öl- und Benzinabscheidern, halogenhaltige Destillationsrückstände, Säuren, Laugen und Konzentrate, Klebstoffe, Kitte und Harze, Kunststoff und Gummiabfälle, Abfälle mineralischen Ursprungs wie Schlacken, Metallabfälle, Abfälle von Veredelungsprodukten, Quecksilber- und Trockenbatterien, LHKW, Aromaten und andere. Diese im Müllkörper 2 vermuteten Abfälle sollen mit der beschriebenen Anlage in unschädliche Reststoffe umgewandelt werden.

Im nun näher erläuterten Fallbeispiel beträgt die Verdunstung des Niederschlagswassers an der Bodenoberfläche im Jahresmittel 73 % des Niederschlags unter natürlichen Bedingungen. Ohne weitere Maßnahme müßten somit bei einer Altdeponie 27 % des jährlich fallenden Niederschlags als Sickerwasser abgepumpt und abgeleitet werden. Durch die beschriebene Verrieselung, Einstellung eines optimalen Wassergehaltes und, falls als Ergänzung erforderlich, durch intensive Bepflanzung ist es möglich, diese Differenz zwischen Niederschlag und Verdunstung auszugleichen. Dies wird dadurch erleichtert, daß Altdeponie-Sickerwasser eine durchschnittliche Temperatur von 14 bis 19° Celsius hat und somit auch während der kalten Jahreszeit ausgebracht und verdunstet werden kann. Sollte jedoch aufgrund örtlicher Verhältnisse in den Monaten November bis März die Möglichkeit der Verdunstung nur unzureichend gegeben sein, so müßte über den Winter der Niederschlag als Sickerwasser zurückgehalten werden. Bei einem angenommenen nutzbaren Porenvolumen von 30 % in der Kiesschicht 3 und im Müllkörper 2 bedeutet dies, daß bis Winterende der Sickerwasserspiegel 7 in der Deponie um beispielsweise 1 Meter steigt. Um eine Gefährdung des Grundwassers auszuschließen, müßte also der Sickerwasserspiegel 7 im Sommer um mehr als 1 Meter stärker abgesenkt werden, als zum Erhalt des hydraulischen Gefälles nötig ist.

Für die Verdunstung von freien Wasserflächen werden Werte von 635 bis 930 mm/a (Schroeder, 1958), 800 bis 1000 mm/a (Taschenbuch der Wasserwirtschaft, 1982) und 600 bis 1000 mm/a (Imhof, 1972) genannt. Etwa 80 % der Verdunstungsrate entfallen auf den Sommer. Aufgrund dieser Überlegungen scheint es möglich, im langjährigen Mittel das gesamte Sickerwasser zu verdunsten.

Bei einer angenommenen Altdeponiefläche in der Größenordnung von 10 ha und einer jährlichen Regenmenge von 700 bis 750 l/m$^2$ ergibt eine tägliche Sickerwasserförderung von 800 m$^3$, bzw. über ein Jahr eine Gesamtförderung von 88 000 m$^3$ brauchbare Ergebnisse. Um den Gesamtwasserinhalt der Deponie einmal umzupumpen, ist dazu ein Zeitraum von etwa einem Jahr nötig.

Neben dem Pumpensumpf wird das externe Rückhalte-Speicherbecken 31 für zweckmäßig gehalten. Dieser Wochenspeicher sollte etwa für eine Woche den Spitzenabfluß von 10 m$^3$/d · ha aufnehmen können. Durch diese freie Wasserfläche können Verdunstung und Versickerung noch erheblich gesteigert werden. Ein Versalzen der Deponieoberfläche ist auszuschließen, da die Durchfeuchtung des Bodens kontrolliert und konstant gehalten werden kann und somit ein Ausfallen leichtlöslicher Stoffe verhindert wird. Gleichzeitig werden sich mit dem Kreislaufwasser ausgetragene Schwermetalle an der Oberfläche anreichern, falls es sich dabei um stabile Oxide und Hydroxide handelt. Diese Stoffe sind in der Regel biologisch unschädlich. Instabile, bzw. im oxidischen Milieu lösliche Schwermetallverbindungen werden mit dem verrieselten Wasser wieder in den Deponiekörper eingetragen und durchlaufen erneut Zonen mit reduzierendem oder oxidierendem Milieu. Die hier stabilen Verbindungen werden dabei dem Sanierungsziel entsprechend vererzt.

Das angestrebte Ziel ist somit eine vollständige Sickerwasserkreislaufführung und konsequente Bewirtschaftung der Sickerwassermenge unter Ausnützung einer hohen erreichbaren Verdunstung, z. B. durch gute Windexposition, hohe mögliche Pflanzenbewuchsdichte und Einstellung eines optimalen Wassergehaltes. Die Sickerwasserkreislaufführung unter vollständiger Vermeidung der externen Behandlung des Materials des Müllkörpers 2 und des Erdreichs 8, außer auf biologischem Weg und durch Entgasung, bis zu dem Zeitpunkt, da alle organischen Schadstoffe dem Sanierungskonzept entsprechend chemisch umgesetzt oder entfernt sind und alle anorganischen Schadstoffe, wie Schwermetalle, inertisiert bzw. vererzt sind, löst in umweltverträglicher und zudem kostengünstiger Weise die Probleme der Altlastensanierung.

In der Entgasungsstation 15 findet eine Entfernung der leichtflüchtigen Schadstoffe aus dem Umlauf-Sickerwasser und damit langfristig aus dem Anlagenbereich statt. Sie betrifft in erster Linie die LHKW's. Ein langfristiger Einschluß dieser Stoffe im Deponiekörper ist bei keiner Art von technisch realisierbaren Verbaumaßnahmen möglich. Die forcierte Extraktion über Strippung des Kreislaufwassers (d. h. durch Vergrößerung der Oberfläche des Wassers, z. B. durch Verrieseln oder Druckverminderung, um die im Wasser enthaltenen leichtlöslichen Stoffe in die Dampfform zu überführen) und Reinigung des abgesaugten Deponiegases über Aktivkohlefilter ermöglicht die kontrollierte Abscheidung dieser Schadstoffe und deren Beseitigung aus der Biosphäre.

Mit dem Kreislaufwasser versprühte wasserdampfflüchtige und nichtflüchtige Schadstoffe können erforderlichenfalls über Filtrierung des Kreislaufwassers abgeschieden werden. Für gewisse Schadstoffe, insbesondere Dioxine und Furane, gilt das Verbringen an die Oberfläche mit Lichtexposition, besonders im UV-Bereich, als eine Methode des schnellen Abbaus zu ungiftigen Produkten. Auch aliphatische, aromatische und polyzyklische Kohlenwasserstoffe werden am schnellsten unter oxidierenden Bedingungen und bei Anwesenheit von Licht im sichtbaren und UV-Bereich abgebaut.

Der schnellen Entsorgung von Schadstoffen wie Heiz- und Dieselöl, Vergasertreibstoffen, Benzol, Phenol, Formaldehyd uva. auf biotechnologischem Weg dienen die aeroben Mikroorganismen, die diese Stoffe teilweise als Nährstoff zur Vermehrung, teilweise zur Aufrechterhaltung ihres Energiehaushaltes verwerten. Auch für einige Dioxine, die bisher als schwer abbaubar gelten, gibt es Hinweise auf die Existenz von Bakterien, die diese in weniger gefährliche Bestandteile zerlegen können. Der Engpaß für die Effizienz dieser Mikroorganismen ist normalerweise das begrenzte Sauerstoffangebot.

Mit Hilfe der Belüftungsstation 21 kann in erwünschter Weise der Sauerstoffgehalt des zu verrieselnden Sickerwassers möglichst hoch gehalten werden. Zum vollkommenen biologischen Abbau soll ein optimaler Wassergehalt von 50 bis 60 % eingestellt werden, was durch die Sickerwasserkreislaufführung möglich ist.

Durch die Koexistenz einer aeroben und einer anaeroben Phase wird die Differenzierung in Horizonte verschiedener pH-Wertigkeit erreicht. In den oberen Bereichen eines Müllkörpers wird sich durch die Anreicherung von Carbonsäuren ein saures Milieu ausbilden, das mit zunehmender Tiefe und zunehmendem pH-Wert in den basisch-anaeroben unteren Bereich übergeht.

Das zusätzliche Aufbringen von Klärschlamm auf das kontaminierte Erdreich 8 und den Müllkörper 2 stellt eine Option dar, die unter dem Gesichtspunkt des Entsorgungsdrucks dieses Materials einerseits und der Versorgung der zum Abbau der Schadstoffe erwünschten Bakterienfauna mit Nährstoffen andererseits gesehen werden muß. Die Beseitigung von Klärschlamm führt zu wachsenden Problemen. So ist die Landwirtschaft nur noch bedingt aufnahmebereit für diesen Wertstoff. Die Verbrennung dieser Stoffe stellt eine aufwendige und teure Lösung dar. Dieses Problem wird durch Aufbringen auf die mit Sickerwasser berieselte Altdeponie gelöst. Die düngende und für Mikroorganismen belebende Wirkung kann voll ausgenützt werden, der Klärschlamm wird an Ort und Stelle biologisch umgesetzt und "verbraucht". Durch die Verregnung des Sickerwassers können die Nährstoffe bis weit unter die Deponieoberfläche eingebracht werden und den biologischen Abbau der Altlasten-Stoffe unterstützen.

Neben der biologischen Sanierung und der kontrollierten Entgasung der Deponie tritt die Überführung nicht abbaubarer Schadstoffe, insbesondere Schwermetalle, in unlösliche Verbindungen mit einhergehender Inertisierung und Vererzung ein. Hierbei soll die Tatsache ausgenützt werden, daß die Löslichkeit vieler Verbindungen in einem Lösungsmittel wie Wasser temperatur- und pH-abhängig ist. Im Sättigungszustand steht der gelöste Stoff mit einem ganz bestimmten Bodenkörper im Gleichgewicht, allein in Bezug auf diesen Bodenkörper ist von einer Sättigung der Lösung und Ausbildung einer bestimmten Sättigungskonzentration zu sprechen.

Aus geologischer Sicht wird eine Lagerstättenbildung angestrebt, und zwar eine hydrothermale Lagerstätte im epithermalen Bereich. Unter natürlichen Bedingungen dauert diese Ausbildung einer solchen Lagerstätte mehrere tausend bis zehntausend Jahre. Dabei muß aber nicht nur zeitlich, sondern auch räumlich in geologischen Dimensionen gedacht werden. Dagegen ist es in einem so begrenzten Bereich, wie ihn die Deponie darstellt, und unter den künstlich geschaffenen Bedingungen der Sickerwasserkreislaufführung und der permanenten Wärmeproduktion durch Zersetzungsvorgänge möglich, diese Entwicklung in einem überschaubaren Zeitraum ablaufen zu lassen. Es wird angenommen, daß die Schadstoffe der Altdeponien in einem Zeitraum von 30 bis 100 Jahren soweit abgebaut sind, daß die Altdeponie sich selbst überlassen werden kann.

Ziel der Behandlung ist nicht die Verlagerung der Schadstoffe in andere Medien oder in nicht handhabbare Reststoffe. Anorganische Stoffe sollen umweltneutral fixiert werden, während bei organischen Stoffen die Mineralisierung durch biologischchemische Behandlung das Ziel darstellt. Dies wird durch das beschriebene Verfahren erreicht.

**Patentansprüche**

1. Verfahren zur Behandlung von kontaminiertem Erdreich (8), dadurch gekennzeichnet, daß man es auf eine bereits geschlossene Mülldeponie, die als Müllkörper (2) mit wasserdurchlässig gehaltener Oberfläche seitlich abgedichtet in großräumigen Wannen (11) abgelagert ist, aufbringt und aus dem unteren Bereich der Wanne Sickerwasser abpumpt, aus dem abgepumpten Wasser einige Schadstoffe durch Entgasung, Strippung und/oder Filterung entfernt und das abgepumpte Sickerwasser nach dem Entfernen der einigen Schadstoffe wieder zumindest teilweise über dem mit kontaminiertem Erdreich (8) bedeckten Müllkörper (2) verrieselt.

2. Verfahren nach Anspruch 1, dadurch gekennzeichnet, daß man oben auf den Müllkörper (2) zusätzlich zum kontaminierten Erdreich (8) auch noch zu entsorgenden Klärschlamm aufbringt.

3. Verfahren nach Anspruch 1 oder 2, dadurch gekennzeichnet, daß man im Jahreszyklus in der warmen Jahreszeit größere Wassermengen abpumpt und verrieselt, als in der kalten Jahreszeit.

4. Verfahren nach einem der Ansprüche 1 bis 3, dadurch gekennzeichnet, daß man einen Teil der Oberseite der Deponie (1) überdacht und das Regenwasser vom Dach seitlich der Deponie ableitet.

5. Verfahren nach einem der Ansprüche 1 bis 4, dadurch gekennzeichnet, daß man in den Müllkörper (2) Frischluft einbläst.

6. Verfahren nach einem der Ansprüche 1 bis 5, dadurch gekennzeichnet, daß man Bodenluft aus dem Müllkörper (2) absaugt (bei 41).

7. Verfahren nach einem der Ansprüche 1 bis 6, dadurch gekennzeichnet, daß man den Müllkörper (2) mit dem kontaminierten Erdreich (8) an seiner Oberseite mit Pflanzen begrünt.

8. Verfahren nach einem der Ansprüche 1 bis 7, dadurch gekennzeichnet, daß man das Sickerwasser so stark abpumpt, daß kein durch den Müllkörper (2) nach unten sickerndes Wasser an den Abpumpstellen der Sickerwasserpumpen (12) vorbei nach unten dringt.

**Claims**

1. Method for treating contaminated soil (8), characterized in that the contaminated soil is spread over a garbage dump already closed which, as a garbage body (2) with an upper surface permeable to water and with lateral sides impermeable to water, is deposited in a spaceous tanking (11), and that from the lower zone of the tanking seeping water is pumped off, from the water pumped off some harmful substances are removed by degasing, stripping and/or filtering, and the seeping water pumped off, after removal of the harmful substances mentioned, is at least partially again distributed over the garbage body (2) covered with the contaminated soil (8).

2. Method according to claim 1, characterized in that on top of the garbage body (2), in addition to the contaminated soil (8) also sewage sludge to be disposed of is deposited.

3. Method according to claim 1 or 2, characterized in that in the annual cycle, in the warm season bigger amounts of water are pumped off and re-distributed than in the cold season.

4. Method according to any of claims 1 to 3, characterized in that part of the upper side of the dump (1) is rooved over and that the rain water from the roof is diverted laterally to the dump.

5. Method according to any of claims 1 to 4, characterized in that fresh air is blown into the garbage body (2).

6. Method according to any of claims 1 to 5, characterized in that ground air is sucked out of the garbage body (2) (at 41).

7. Method according to any of claims 1 to 6, characterized in that the garbage body (2) with the contaminated soil (8) at its upper side is greened with plants.

8. Method according to any of claims 1 to 7, characterized in that the seeping water is pumped off to such an extent that no water seeping downwardly through the garbage body (2) downwards bypasses the pumping-off points of the pumps (12) for the seeping water.

**Revendications**

1. Procédé de traitement de sols contaminés (8), caractérisé en ce qu'
on épand sur un dépôt d'ordures déjà compacté, qui est déposé comme tas de déchets (2) avec une surface maintenue perméable à l'eau dans des cuves (11) de grande capacité, rendues étanches sur les côtés et on enlève par pompage de la zone inférieure de la cuve de l'eau d'infiltration, on élimine de l'eau retirée par pompage quelques matières par dégazage, stripping et/ou filtrage et on épand l'eau d'infiltration retirée par pompage après élimination des quelques matières nocives à nouveau au moins partiellement sur le tas de déchets (2) recouvert du sol contaminé (8).

2. Procédé selon la revendication 1, caractérisé en ce qu'
on épand aussi sur le tas de déchets (2) en plus du sol (8) contaminé des boues de curage à se défaire.

3. Procédé selon les revendications 1 ou 2, caractérisé en ce que
dans le cycle annuel, on évacue par pompage et on épand pendant la saison chaude des quantités d'eau plus importantes que pendant la saison froide.

4. Procédé selon une des revendications 1 à 3, caractérisé en ce qu'
on recouvre d'un toit une portion de la partie supérieure du dépôt de déchets (1) et que l'on détourne l'eau de pluie du toit latéralement au dépôt.

5. Procédé selon une des revendications 1 à 4, caractérisé en ce qu'
on insuffle de l'air frais dans le tas de déchets (2).

6. Procédé selon une des revendications 1 à 5, caractérisé en ce qu'
on aspire (par 41) l'air du fond du tas de déchets (2).

7. Procédé selon une des revendications 1 à 6, caractérisé en ce qu'
on gazonne avec des plantes le tas de déchets (2) avec le sol contaminé (8) à sa partie supérieure.

8. Procédé selon une des revendications 1 à 7, caractérisé en ce qu'
on enlève par pompage l'eau d'infiltration d'une manière si puissante, que l'eau s'infiltrant vers le bas à travers le tas de déchets (2) au dehors des emplacements de pompage des pompes de l'eau d'infiltration (12) ne peut pas pénétrer vers le bas.

Fig. 1

EP 0 591 567 B1

Fig. 2

EP 0 591 567 B1

Fig. 3